Europäisches Patentamt

European Patent Office

Office européen des brevets

(19)

(11) Publication number: **0 060 201**
**B1**

# (12) EUROPEAN PATENT SPECIFICATION

(45) Date of publication of patent specification: **29.05.85**

(51) Int. Cl.⁴: **B 60 T 13/24**

(21) Application number: **82400414.7**

(22) Date of filing: **09.03.82**

(54) Tandem brake booster.

(30) Priority: **09.03.81 US 242087**

(43) Date of publication of application:
**15.09.82 Bulletin 82/37**

(45) Publication of the grant of the patent:
**29.05.85 Bulletin 85/22**

(84) Designated Contracting States:
**DE FR GB IT**

(56) References cited:
**DE-A-2 304 834**
**GB-A-1 508 613**
**US-A-3 096 689**

(73) Proprietor: **THE BENDIX CORPORATION**
**Executive Offices Bendix Center**
**Southfield Michigan 48037 (US)**

(72) Inventor: **Myers, Lawrence Robert**
**21945 Roosevelt Road**
**South Bend Indiana 46614 (US)**

(74) Representative: **Huchet, André et al**
**Service Brevets Bendix 44, rue François 1er**
**F-75008 Paris (FR)**

Courier Press, Leamington Spa, England.

## Description

This invention relates to a tandem brake booster for providing a master cylinder with an actuating force in response to an operator brake input, according to the precharacterizing portion of claim 1.

Such a tandem brake booster is disclosed, for instance, in US—A—3,096,689. The known booster has two substantially identical power producing movable walls located in a single housing. The movable walls are separated by a partition member which prevents fluid communication between a rear chamber associated with the first wall and a front chamber associated with the second wall. Thus, the first and second walls and partition divide the cavity within the housing into four distinct chambers which are required to operate such brake boosters.

While a tandem brake booster does produce substantially twice the amount of output force of a single brake booster of the same diameter, the overall length of a tandem brake booster is also about double that of a single brake booster. In some vehicles currently in production, an increase in the length of such a brake booster requires the selection of a different type brake booster since the under hood space is limited.

In US—A—3,188,920 is further disclosed a single brake booster whose housing is divided into three chambers by two walls with the working chamber located between two reference chambers. One wall is connected to the output member while a second wall supplies the operator with a reactionary force corresponding to the output of the first wall produced by a pressure differential between the working chamber and reference chamber. However, the output force developed in the brake booster is entirely dependent on the action of the pressure differential on the first wall.

Starting from this state of art, it is an object of the present invention to reduce the overall length of a tandem brake booster such as disclosed in US—A—3,096,689 while retaining the advantages of simplicity in design and cheapness in construction.

This object is achieved, according to the teaching of this invention, and in a tandem brake booster of the kind comprising within a common housing two movable walls which divide its inner cavity into a plurality of variable-volume pressure chambers and are coupled with an output member for actuating an associated master cylinder, and a valve mechanism responsive to an input force developed on a brake pedal for establishing and controlling a fluid pressure differential across said movable walls to submit same to motive forces which are additively transmitted to the output member to impart thereto an output force corresponding to said input force, thanks to the fact that the movable walls are so arranged that the motive forces to which they are submitted in response to said fluid pressure differential are in opposite directions, one of said walls being coupled with the output member through a direct transmission while the other is coupled therewith through a reversing mechanism. Further embodiments of the invention are disclosed in the dependent claims.

In a preferred embodiment of the invention, the movable walls are arranged to divide the inner cavity of the housing into three variable-volume pressure chambers, namely a first chamber defined between one housing end portion and one of said walls, a second chamber defined between said one wall and the other wall, and a third chamber defined between said other wall and another housing end portion, said first and third chambers being permanently communicated with a source of lower pressure fluid, and said second chamber being communicable with the same source or with a source of higher pressure fluid in response to the actuation of the valve mechanism. Advantageously, the reversing mechanism comprises at least one lever pivotally secured at one end thereof to one of the movable walls and abuttingly engaging at its opposite end the other movable wall, said lever further engaging a fulcrum intermediate its ends. Preferably, the reversing mechanism comprises two levers or pairs of levers which are arranged symmetrically to each other with respect to a plane containing the booster axis, this arrangement permitting to mutually cancel radial components of the forces which are transmitted from one wall to the other through the reversing mechanism.

One advantage of this invention results from the use of a common working chamber for the two reference chambers to provide a compact tandem brake booster.

Another advantage of this invention results from the use of the lever arrangement to match the movement of one of the walls with the other wall by locating the position of the fulcrum.

These and other advantageous features of the invention will become readily apparent from reading the following description of a preferred embodiment, given by way of example only, and with reference to the accompanying drawings, in which:

FIGURE 1 is a sectional view of a tandem brake booster made according to the principles of this invention, and shown in its rest position;

FIGURE 2 is a sectional view of a portion of the tandem brake booster shown in FIGURE 1 with the movable walls in an operational position; and

FIGURE 3 is a view taken along line 3—3 of FIGURE 1 showing the lever arrangement which is used as a reversing mechanism.

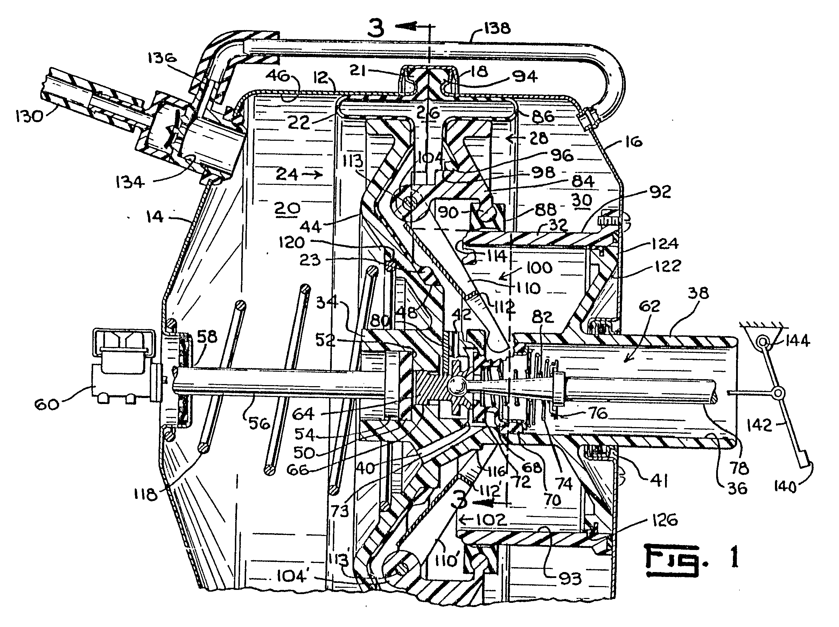

The tandem brake booster shown in FIGURE 1 has a housing 12 made of a front shell 14 and a rear shell 16 joined together by a band 18. The interior of the housing 12 is divided into a first chamber 20 whose limits are defined by the housing 12 and a first movable wall 24, a second chamber 26 whose limits are defined by the first movable wall 24, housing 12 and a second movable wall 28, and a third chamber 30 whose limits are defined by the second movable wall 28, housing 12 and a cylindrical projection 32 extending from the rear shell 16.

The first movable wall 24 includes a diaphragm 22 and a hub member 34 which itself comprises an annular backing plate 44 that extends toward the side wall 46 of the housing. A first bead 21 on diaphragm 22 is retained by band 18 and a second bead 23 is located on a shoulder 48 on the hub member 34 to seal the second chamber 26 from the first chamber 20. The hub member 34 has an axial annular projection 38 that extends through an opening 41 in shell 16. An axial bore 36 which extends through the annular projection 38 and hub member 34 has an opening 40 into chamber 20 and an opening 42 into chamber 26.

A reaction disc 50 located in bore 36 adjacent a shoulder 52 forms a base for a head 54 on a push rod 56. Push rod 56 which extends through an opening 58 in shell 14 is connected to a master cylinder 60. The master cylinder 60 is itself connected to the wheel brakes of a vehicle.

A valve 62 located in bore 36 has a plunger 64 that slides along a bearing surface 66 adjacent shoulder 52, and a poppet 68. A first end 70 of the poppet 68 is fixed to the annular projection 38 and a second end 72 is free to move within the bore 36. A first spring 74 located between the first end 70 of the poppet 68 and a retainer 76 on push rod 78 urges the plunger 64 into engagement with a key 80 to retain the valve 62 in bore 36. A second spring 82 located between retainer 76 and poppet 68 urges the second end 72 into engagement with the end of plunger 64 to allow free connection between the first chamber 20 and second chamber 26 in a rest position.

The second movable wall 28 includes a disc member 84 and a diaphragm 86. A seal 88 located on a rib 90 of the disc member 84 slides along the peripheral surface 92 on the cylindrical projection 32. Diaphragm 86 has a first bead 94 that engages bead 21 on diaphragm 22 to seal chamber 26 from the surrounding environment and a second bead 96 that is located in a groove 98 on disc member 84 to seal the second chamber 26 from the third chamber 30.

The second movable wall 28 is connected to the first movable wall 24 through lever arrangements 100 and 102 which, as explained in more detail hereunder, operate as a reversing mechanism.

The lever arrangements 100 and 102 have arms 108, 110 and 108', 110' that are connected to each other by braces 112, 112', respectively. Pins 113, 113' extend through flanges 104 and 104' on disc member 84 and the first ends of arms 108, 110 and 108', 110' to secure the lever arrangements 100 and 102 to the second movable wall 28. The second ends of arms 108, 110 and 108', 110' engage a rib 116 on hub 34. The end 114 of the cylindrical member 32 engages arms 108, 110 and 108', 110' to establish a fulcrum for lever arrangements 100 and 102. A spring 118 located in a groove 120 on hub 34 engages the front shell 14 and urges the hub 34 toward the rear shell 16 until a radial projection 122 on projection 38 engages a stop 124. As hub 34 moves toward shell 16, arms 108, 110 and 108', 110' pivot about fulcrum 114 to move disc member 84 toward the second chamber 26. A seal 126 attached to the radial projection 122 engages an inner surface 93 on cylindrical member 32 to seal chamber 26 from the surrounding environment and to assist in holding the hub 34 in the center of opening 41 as wall 24 moves toward chamber 20.

The above described tandem brake booster operates as follows:

Vacuum is produced at the intake manifold of internal combustion engines. In a vehicle having such an engine and equipped with a brake booster as shown in FIGURE 1, a conduit 130 connects with the intake manifold a check valve which is fixed to shell 14 and has a bore 134 connected to chamber 20 and a passage 136 connected to chamber 30 by a conduit 138.

With the first and second movable walls 24 and 28 and the control valve 62 in the rest position shown in FIGURE 1, vacuum present in bore 134 evacuates air directly from chambers 20 and 30 and from chamber 26 by way of passage 42, bore 36 and passage 40.

When an operator desires to effect a brake application, an input force is applied to pedal 140 causing lever 142 to pivot about fixture pin 144 and impart a linear input to push rod 78.

Initial movement of push rod 78 allows spring 82 to move end 72 of poppet 68 against vacuum seat 73 and interrupt fluid communication from chamber 20 into bore 36 through passage 40. Further movement of push rod 78 moves plunger 64 away from end 72 of poppet 68 to allow air or any other operational fluid, such as compressed gas, to flow into chamber 26 by way of bore 36 and passage 42. With air in chamber 26 and vacuum present in chambers 20 and 30 a pressure differential is created across walls 24 and 28. This pressure differential simultaneously acts on wall 24 to develop a first force that is transmitted into hub 34 directly and on wall 28 to develop a second force that is transmitted into hub 34 through the intermediary of the lever arrangements 100 and 102 which operate as a reversing mechanism. The first and second forces are thus added in the hub 34 and transmitted to push rod 56 by way of reaction disc 50 to provide the master cylinder 60 with an operational force corresponding to the input force.

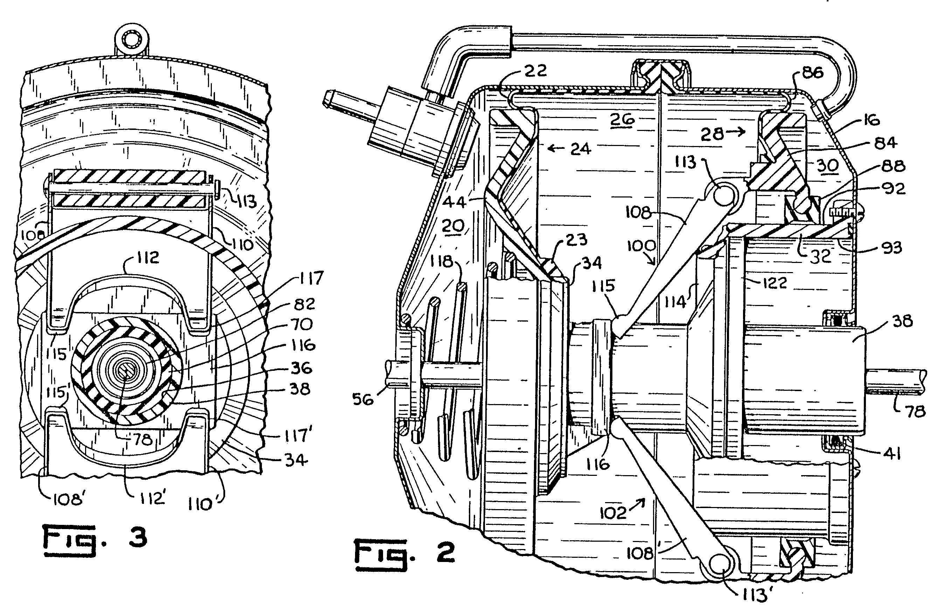

As best shown in FIGURE 2, wall 24 moves toward chamber 20 and wall 28 moves in the opposite direction toward chamber 30. The diameter of cylindrical member 32 can be selected such that the fulcrum for the levers 108, 110 and 108', 110' can be in the midpoint between pins 113, 113' and lever ends 115, 117 and 115', 117'. In which case, the output force produced by the movement of the second wall 28 toward chamber 30 is integrally transmitted into shoulder 116. However, under some circumstances, it may be desirable to change the position of the fulcrum to modify the force transmitted into the shoulder 116 by a ratio of the distance between the fulcrum and input and output ends of the levers 108, 110 and 108', 110'.

When the input force on brake pedal 140 terminates, return spring 74 moves push rod 78 to initially bring plunger 64 into engagement with end 72 of poppet 68 to interrupt the communication of air from bore 36 to chamber 26 through passage 42 and thereafter move end 72 of poppet 68 away from seat 73 to allow vacuum present in chamber 20 to evacuate air from chamber 26. As air is evacuated from chamber 26, the pressure differential across walls 24 and 28 is correspondingly reduced to allow spring 118 to act on hub 34 and urge the first wall 24 toward the second chamber 26 until radial projection 122 engages stop 124 as shown in FIGURE 1.

The movement of the first wall 24 toward the second chamber 26 creates a force that causes levers 108, 110 and 108', 110' to pivot about the fulcrum 114 and also move the second wall 28 toward the second chamber 26. When the radial projection 122 engages stop 124, the second wall 28 is in the rest position shown in FIGURE 1.

## Claims

1. A tandem brake booster, comprising within a common housing (12) two movable walls (24, 28) which divide its inner cavity into a plurality of variable-volume pressure chambers (20, 26, 30) and which are coupled with an output member (56) for actuating an associated master cylinder (60), and a valve mechanism (62) responsive to an input force developed on a brake pedal (140) for establishing and controlling a fluid pressure differential across said movable walls to submit same to motive forces which are additively transmitted to the output member to impart thereto an output force corresponding to said input force, characterized in that the movable walls (24, 28) are so arranged that the motive forces to which they are submitted in response to said fluid pressure differential are in opposite directions, one (24) of said walls being coupled with the output member (56) through a direct transmission (52) while the other (28) is coupled therewith through a reversing mechanism (100, 102).

2. A tandem brake booster according to Claim 1, characterized in that the movable walls (24, 28) are arranged to divide the inner cavity of the housing (12) into three variable-volume pressure chambers (20, 26, 30), namely a first chamber (20) defined between one housing end portion (14) and one (24) of said walls, a second chamber (26) defined between said one wall (24) and the other wall (28), and a third chamber (30) defined between said other wall (28) and another housing end portion (16), said first and third chambers (20, 30) being permanently communicated with a source of lower pressure fluid, and said second chamber (26) being communicable either with the same source or with a source of higher pressure fluid in response to the actuation of the valve mechanism (62).

3. A tandem brake booster according to Claim 1 or 2, characterized in that the reversing mechanism (100, 102) comprises at least one lever (108, 110; 108', 110') pivotally secured at one end thereof to one (28) of the movable walls and abuttingly engaging at its opposite end the other movable wall (24), said lever further engaging a fulcrum (114) intermediate its ends.

4. A tandem brake booster according to Claim 3, characterized in that the reversing mechanism (100, 102) comprises two levers or pairs (108, 110; 108', 110') of levers which are arranged symmetrically to each other with respect to a plane containing the booster axis.

5. A tandem brake booster according to any of Claims 1 to 4, wherein one (24) of the movable walls includes a backing plate and hub member (44, 34) having an axial projection (38) which slidably and sealingly extends through an opening (41) in an end wall (16) of the housing (12) and which has a bore (36) for retaining the valve mechanism (62) therein, characterized in that the other movable wall (28) includes an annular disc member (84) slidably and sealingly mounted on a cylindrical projection (32) extending from said end wall (16) of the housing (12) and surrounding said axial projection (38) of the hub member (34).

6. A tandem brake booster according to Claim 5, characterized in that said cylindrical projection (32) terminates in an annular and rounded end face (114) which establishes a fulcrum for said lever or levers (108, 110, 108', 110').

7. A tandem brake booster according to Claim 5 or 6, characterized in that the axial projection (38) of the hub member (34) carries a radial projection (122) which slidably and sealingly engages an inner surface (93) of said cylindrical projection (32) to confine said second chamber (26).

8. A tandem brake booster according to Claim 7, characterized in that said radial projection (122) further cooperates with the end wall (16) of the housing to limit movement of the hub member (34) in one direction and thus define a rest position for the movable walls (24, 28).

## Patentansprüche

1. Tandem-Servomotor für Bremsen, mit zwei innerhalb eines gemeinsamen Gehäuses (12) bewegbaren Wänden (24, 28), die dessen Innenraum in mehrere volumenveränderliche Druckkammern (20, 26, 30) unterteilen und die mit einem Ausgangsglied (56) zum Betätigen eines zugehörigen Hauptbremszylinders (60) gekoppelt sind, und einer Ventileinrichtung (62), die in Abhängigkeit von einer an einem Bremspedal (140) entwickelten Eingangskraft eine Druckdifferenz an die bewegbaren Wände anlegt und steuert, um diese mit Antriebskräften zu beaufschlagen, die additiv auf das Ausgangsglied übertragen werden, um dieses mit einer der Eingangskraft entsprechenden Ausgangskraft zu beaufschlagen, dadurch gekennzeichnet, daß die bewegbaren Wände (24, 28) so ausgebildet sind, daß die Antriebskräfte, mit denen sie in Abhängigkeit von der Druckdifferenz beaufschlagt sind, in entgegengesetzte Richtungen zeigen, wobei eine (24) der Wände mit dem Ausgangsglied (56) über eine direkte Übertragungsvorrichtung (52) verbunden ist, während die andere (28) mit diesem durch eine Reversiervorrichtung (100, 102) verbunden ist.

2. Tandem-Servomotor nach Anspruch 1, dadurch gekennzeichnet, daß die bewegbaren Wände (24, 28) so ausgebildet sind, daß sie den Innenraum des Gehäuses (12) in drei volumenveränderliche Druckkammern (20, 26, 30) unterteilen, und zwar in eine erste Kammer (20), die zwischen einem Gehäuseendabschnitt (14) und einer (24) der Wände gebildet ist, eine zweite Kammer (26), die zwischen der besagten einen Wand (24) und der anderen Wand (28) gebildet ist, und eine dritte Kammer (30), die zwischen der besagten anderen Wand (28) und einem weiteren Gehäuseendabschnitt (16) gebildet ist, wobei die erste und dritte Kammer (20, 30) ständig mit einer Niederdruckquelle verbunden ist und die zweite Kammer (26) entweder mit der gleichen Niederdruckquelle oder einer Quelle höheren Drucks in Abhängigkeit von der Betätigung der Ventileinrichtung (62) verbindbar ist.

3. Tandem-Servomotor nach Anspruch 1 oder 2, dadurch gekennzeichnet, daß die Reversiervorrichtung (100, 102) mindestens einen Hebel (108, 110; 108', 110') aufweist, der mit seinem einen Ende an einer (28) der bewegbaren Wände schwenkbar angebracht ist und mit seinem entgegengesetzten Ende an der anderen bewegbaren Wand (24) anliegt, wobei der Hebel außerdem an einer Schwenkachse (114) zwischen seinen Ende anliegt.

4. Tandem-Servomotor nach Anspruch 3, dadurch gekennzeichnet, daß die Reversiervorrichtung (100, 102) zwei Hebel oder Paare (108, 110; 108', 110') von Hebeln aufweist, die symmetrisch zueinander bezüglich einer die Servomotorachse enthaltenden Ebene angeordnet sind.

5. Tandem-Servomotor nach einem der Ansprüche 1—4, bei dem eine (24) der bewegbaren Wände eine Abstützplatte und ein Nabenteil (44, 34) mit einem axialen Vorsprung (38) aufweist, der sich gleitend und abgedichtet durch eine Öffnung (41) in einer Stirnwand (16) des Gehäuses (12) erstreckt und eine Bohrung (36) aufweist, die die Ventileinrichtung (62) enthält, dadurch gekennzeichnet, daß die andere bewegbare Wand (28) eine ringförmige Scheibe (84) umfaßt, die auf einem zylindrischen Vorsprung (32) gleitend und abgedichtet gelagert ist, der sich von der besagten Stirnwand (16) des Gehäuses (12) wegerstreckt und den axialen Vorsprung (38) des Nabenteiles (34) umgibt.

6. Tandem-Servomotor nach Anspruch 5, dadurch gekennzeichnet, daß der zylindrische Vorsprung (32) in einer ringförmigen und abgerundeten Stirnfläche (114) endet, die eine Schwenkachse für den Hebel bzw. die Hebel (108, 110, 108', 110') bildet.

7. Tandem-Servomotor nach Anspruch 5 oder 6, dadurch gekennzeichnet, daß der axiale Vorsprung (38) des Nabenteiles (34) einen radialen Vorsprung (122) trägt, der gleitend und dichtend an einer Innenfläche (93) des zylindrischen Vorsprungs (32) anliegt, um die zweite Kammer (26) zu begrenzen.

8. Tandem-Servomotor nach Anspruch 7, dadurch gekennzeichnet, daß der radiale Vorsprung (122) ferner mit einer Stirnwand (16) des Gehäuses zusammenwirkt, um die Bewegung des Nabenteiles (34) in einer Richtung zu begrenzen und somit eine Ruhestellung für die bewegbaren Wände (24, 28) zu bilden.

**Revendications**

1. Un amplificateur de freinage double comprenant à l'intérieur d'un boîtier commun (12), deux parois mobiles (24, 28) qui divisent sa cavité intérieure en plusieurs chambres de pression (20, 26, 30) à volume variable et sont couplées à un organe de sortie (56) pour actionner un maître-cylindre associé (60), et un mécanisme de valve (62) fonctionnant en réponse à une force d'entrée exercée sur une pédale (40) de frein pour établir et commander une différence de pression de fluide entre les faces opposées desdites parois mobiles afin de les soumettre à des forces motrices qui sont transmises de manière additive à l'organe de sortie pour lui communiquer une force de sortie correspondant à ladite force d'entrée, caractérisé en ce que les parois mobiles (24, 28) sont disposées de telle sorte que les forces motrices auxquelles elles sont soumises en réponse à ladite différence de pression de fluide sont dirigées dans des sens opposés, l'une (24) des parois étant couplée à l'organe de sortie (56) par l'intermédiaire d'une transmission directe (52) tandis que l'autre (28) est couplée avec lui par l'intermédiaire d'un mécanisme inverseur (100, 102).

2. Un amplificateur de freinage double selon la revendication 1, caractérisé en ce que les parois mobiles (24, 28) sont disposées de façon à diviser la cavité intérieure du boîtier (12) en trois chambres de pression (20, 26, 30) à volume variable, à savoir une première chambre (20) formée entre une partie d'extrémité (14) du boîtier et une première (24) desdites parois, une seconde chambre (26) formée entre ladite première paroi (24) et l'autre paroi (28) et une troisième chambre (30) formée entre ladite autre paroi (28) et une autre partie d'extrémité (16) du boîtier, lesdites première et troisième chambres (20, 30) étant mises en permanence en communication avec une source de fluide à plus basse pression et ladite seconde chambre (26) pouvant être mise en communication avec la même source ou avec une source de fluide à pression plus élevée en réponse à l'actionnement du mécanisme de valve (62).

3. Un amplificateur de freinage double selon la revendication 1 ou 2, caractérisé en ce que le mécanisme inverseur (100, 102) comprend au moins un levier (108, 110, 108', 110') monté pivotant à une de ses extrémités sur l'une (28) des parois mobiles et en appui de butée à son extrémité opposée contre l'autre paroi mobile (24), ledit levier étant, en outre, en appui contre un point d'appui (114) en un emplacement situé entre ses extrémités.

4. Un amplificateur de freinage double selon la revendication 3, caractérisé en ce que le mécanisme inverseur comprend deux leviers ou deux paires de leviers (108, 110, 108′, 110′) qui sont disposés symétriquement l'une à l'autre par rapport à un plan contenant l'axe de l'amplificateur.

5. Un amplificateur de freinage double selon l'une quelconque des revendications 1 à 4, dans lequel l'une (24) des parois mobiles comprend une plaque support et un moyeu (44, 34) muni d'une protubérance axiale (38) qui traverse de manière étanche et coulissante une ouverture (41) formée dans une paroi d'extrémité (16) du boîtier (12) et qui comporte un alésage (36) pour contenir le mécanisme de valve (62), caractérisé en ce que l'autre paroi mobile (28) comporte un disque annulaire (84) monté de manière étanche et coulissante sur une protubérance cylindrique (32) qui s'étend à partir de ladite paroi d'extrémité (16) du boîtier (12) et qui entoure ladite protubérance axiale (38) du moyen (34).

6. Un amplificateur de freinage double selon la revendication 5, caractérisé en ce que ladite protubérance cylindrique (32) se termine par une face d'extrémité (114) annulaire et arrondie qui établit un point d'appui pour ledit levier ou lesdites leviers (108, 110, 108′, 110′).

7. Un amplificateur de freinage double selon la revendication 5 ou 6, caractérisé en ce que la protubérance axiale (38) du moyen (34) porte une protubérance radiale (122) qui est en appui étanche et coulissant contre une surface intérieure (93) de la protubérance cylindrique (32) pour délimiter ladite seconde chambre (26).

8. Un amplificateur de freinage double selon la revendication 7, caractérisé en ce que ladite protubérance radiale (122) coopère, en outre, avec la paroi d'extrémité (16) du boîtier pour limiter le déplacement du moyeu (34) dans une direction et définir ainsi une position de repos pour les parois mobiles (24, 28).

Fig. 1

Fig. 3

Fig. 2

0 060 201